# EUROPÄISCHE PATENTANMELDUNG

(11) **EP 2 361 723 A2**
(43) Veröffentlichungstag der Anmeldung: **31.08.2011**
(21) Anmeldenummer: 11153497.0
(22) Anmeldetag: 07.02.2011
(51) Int. Cl.: B23Q 7/04

(54) **Bearbeitungsanlage für Werkstücke mit Roboter**

(30) Priorität: 18.02.2010 DE 102010002128
(71) Anmelder: Mag Europe GmbH, 73033 Göppingen (DE)
(72) Erfinder: Lang, Heiner, Dr., 75179 Pforzheim (DE); Haus, Waldemar, 71364 Winnenden (DE)
(74) Vertreter: Rau, Schneck & Hübner

(57) **Zusammenfassung**

Eine Bearbeitungsanlage (1) weist eine Werkstück-Positioniereinrichtung (3) mit einer Werkstückhalter-Schwenkeinheit (12) auf, die derart ausgebildet ist, dass ein Werkstückhalter (13) mit einem zu bearbeitenden Werkstück (2) um mindestens fünf Schwenkachsen (14 bis 18) verschwenkbar ist. Zum Drehantreiben eines Werkzeuges (9) um eine Drehachse (35) ist an einem Ständer (7) eine Arbeitsspindeleinheit (8) angeordnet, wobei die Drehachse (35) relativ zu einer horizontalen x-Richtung um einen Winkel α geneigt ist, wobei gilt: 20° ≤ α ≤ 70°, insbesondere 30° ≤ α ≤ 60°, und insbesondere 40° ≤ α ≤ 50°. Die Bearbeitungsanlage (1) ist einfach aufgebaut und ermöglicht eine flexible Fünf-Seiten-Bearbeitung von Werkstücken (2).

## Beschreibung

Die Erfindung betrifft eine Bearbeitungsanlage für Werkstücke, insbesondere zum spanenden Bearbeiten von metallischen Werkstücken oder Werkstücken aus Faserverbundwerkstoffen.

Aus der WO 2010/000 457 A1 ist eine Bearbeitungsanlage für Werkstücke mit einer Werkstück-Positioniereinrichtung und einer zugehörigen Werkzeug-Positioniereinrichtung bekannt. Die Werkstück-Positioniereinrichtung weist eine Werkstückhalter-Schwenkeinheit auf, die derart ausgebildet ist, dass ein Werkstückhalter um drei oder vier Schwenkachsen verschwenkbar ist. Die zugehörige Werkzeug-Positioniereinrichtung weist eine Werkzeughalter-Schwenkeinheit auf, die derart ausgebildet ist, dass eine Arbeitsspindeleinheit um eine oder zwei Schwenkachsen verschwenkbar ist.

Der Erfindung liegt die Aufgabe zugrunde, eine einfach aufgebaute Bearbeitungsanlage zu schaffen, die eine flexible und genaue Fünf-Seiten-Bearbeitung von Werkstücken ermöglicht.

Diese Aufgabe wird durch eine Bearbeitungsanlage mit den Merkmalen des Anspruchs 1 gelöst. Dadurch, dass die Werkstück-PositionierEinrichtung eine Werkstückhalter-Schwenkeinheit mit mindestens fünf Schwenkachsen aufweist, können zu bearbeitende Werkstücke mittels der Werkstück-Positioniereinrichtung aufgenommen, zur Bearbeitung positioniert und anschließend wieder abgelegt werden. Die Werkstück-Positioniereinrichtung ist beispielsweise als Roboter bzw. Industrie-Roboter ausgebildet. Die Drehachse der Arbeitsspindeleinheit ist relativ zu einer horizontalen x-Richtung um einen Winkel α geneigt, wobei der Winkel α im Bereich von 20° bis 70°, insbesondere von 30° bis 60° und insbesondere von 40° bis 50° liegt. Vorzugsweise ist der Winkel α gleich 45°. Dadurch, dass die Arbeitsspindeleinheit zu der Werkstück-Positioniereinrichtung hin geneigt an dem Ständer angeordnet ist, ist in Verbindung mit den mindestens fünf Schwenkachsen der Werkstück-Positioniereinrichtung eine Fünf-Seiten-Bearbeitung der Werkstücke möglich. Darüber hinaus kann durch die feste, also nicht verschwenkbare und geneigte Anordnung der Arbeitsspindeleinheit an dem Ständer die Anzahl der Schwenkachsen insgesamt möglichst klein gehalten werden. Hierdurch weist die Bearbeitungsanlage einen einfachen Aufbau auf, wodurch wiederum die Kosten optimiert werden.

Die Bearbeitungsanlage eignet sich insbesondere für die automatisierte Bearbeitung von Werkstücken mit einer Größe bis ca. 200 mm x 200 mm x 200 mm und einem Gewicht bis ca. 2 kg. Die Werkstücke sind beispielsweise aus einem metallischen Werkstoff, wie Guss, Aluminium oder Titan, oder aus einem Faserverbundwerkstoff.

Eine Bearbeitungsanlage nach Anspruch 2 gewährleistet einen großen Bewegungsraum des Werkstückhalters, so dass die Werkstück-Positioniereinrichtung flexibel zum Aufnehmen und Ablegen von Werkstücken einsetzbar ist. Vorteilhafterweise ist die Werkstückhalter-Schwenkeinheit derart ausgebildet, dass das erste Schwenkteil um die zugehörige Schwenkachse um 360° verschwenkbar ist. Hierdurch wird eine hohe Flexibilität bei der Beschickung mit Werkstücken ermöglicht. Das erste Schwenkteil wird bei einem Industrie-Roboter auch als Karussell bezeichnet.

Eine Bearbeitungsanlage nach Anspruch 3 ermöglicht ein flexibles Positionieren der Werkstücke.

Eine Bearbeitungsanlage nach Anspruch 4 gewährleistet einen einfachen Aufbau. Bei einem Industrie-Roboter werden die Schwenkteile auch als Roboterarme bzw. Schwenkarme bezeichnet.

Eine Bearbeitungsanlage nach Anspruch 5 ermöglicht ein flexibles Positionieren der Werkstücke. Die Schwenkachse kann beispielsweise senkrecht zu der horizontalen Schwenkachse verlaufen und diese schneiden, so dass der Werkstückhalter um seine eigene Achse verschwenkbar ist. Weiterhin kann die Schwenkachse senkrecht zu der horizontalen Schwenkachse verlaufen und diese nicht schneiden.

Eine Bearbeitungsanlage nach Anspruch 6 ist einfach aufgebaut. Der Werkstückhalter ist drehfest und lösbar an dem fünften Schwenkteil angeordnet.

Eine Bearbeitungsanlage nach Anspruch 7 ermöglicht auf einfache Weise eine seitliche Bearbeitung der Werkstücke.

Eine Bearbeitungsanlage nach Anspruch 8 ermöglicht ein eigenständiges Aufnehmen und Ablegen von Werkstücken. Der Werkstückgreifer wird beispielsweise hydraulisch, pneumatisch oder elektromotorisch betätigt.

Eine Bearbeitungsanlage nach Anspruch 9 ermöglicht eine Bearbeitung von unterschiedlichen Werkstück-Typen. Hierzu werden in dem Werkstückhaltermagazin unterschiedliche Werkstückhalter bzw. Werkstückgreifer bereitgestellt, die mittels der Werkstück-Positioniereinrichtung automatisch und ohne Unterbrechung gewechselt werden können. Hierzu wird ein erster, lösbar an der Werkstückhalter-Schwenkeinheit angeordneter Werkstückhalter in dem Werkstückhaltermagazin abgelegt und ein zweiter Werkstückhalter für die Bearbeitung eines neuen Werkstück-Typs an der Werkstückhalter-Schwenkeinheit lösbar befestigt. Mit dem zweiten Werkstückhalter kann die Bearbeitung von Werkstücken eines neuen Werkstück-Typs fortgesetzt werden, ohne dass ein Stillstand der Bearbeitungsanlage erforderlich wäre.

Eine Bearbeitungsanlage nach Anspruch 10 gewährleistet, dass unterhalb der Arbeitsspindeleinheit ein ausreichend großer Arbeitsraum zum Positionieren der Werkstücke bereitgestellt wird.

Eine Bearbeitungsanlage nach Anspruch 11 gewährleistet, dass bei der Bearbeitung entstehende Späne nicht die Arbeitsspindeleinheit verunreinigen.

Eine Bearbeitungsanlage nach Anspruch 12 gewährleistet eine hohe Bearbeitungsgenauigkeit. Dadurch, dass die Masse mₛ des Ständers wesentlich größer als die Masse mₚ der Werkstück-Positioniereinrichtung ist, werden Schwingungen bei der Bearbeitung der Werkstücke wirkungsvoll unterdrückt.

Eine Bearbeitungsanlage nach Anspruch 13 gewährleistet einen einfachen und schnellen Werkzeugwechsel. Der Werkzeugwechsler ist zwischen der Arbeitsspindeleinheit und dem Werkzeugmagazin angeordnet. Das Werkzeugmagazin ist beispielsweise als Scheibenmagazin ausgebildet, wobei die Werkzeughalter derart angeordnet oder verschwenkbar sind, dass sich die Werkzeuge zum Werkzeugwechsel in radialer Richtung erstrecken.

Eine Bearbeitungsanlage nach Anspruch 14 gewährleistet einerseits eine exakte Positionierung der Werkstück-Positioniereinrichtung und der Arbeitsspindeleinheit zueinander und andererseits einen wirkungsvollen Abtransport von bei der Bearbeitung entstehenden Spänen.

Eine Bearbeitungsanlage nach Anspruch 15 ermöglicht einen automatischen An- und Abtransport von zu bearbeitenden bzw. bearbeiteten Werkstücken.

Weitere Merkmale, Vorteile und Einzelheiten der Erfindung ergeben sich aus der nachfolgenden Beschreibung eines Ausführungsbeispieles. Es zeigen:
- Figur 1: eine erste perspektivische Ansicht einer Bearbeitungsanlage mit zwei Transporteinrichtungen,
- Figur 2: eine erste Seitenansicht der Bearbeitungsanlage in Figur 1 ohne die Transporteinrichtungen,

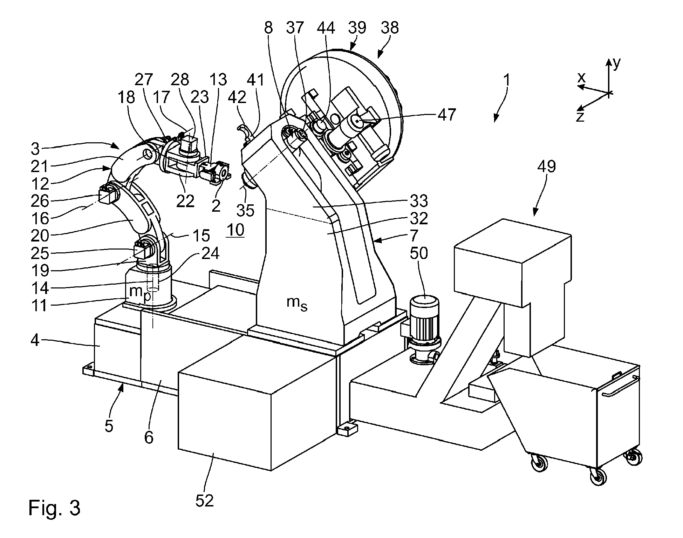

- Figur 3: eine zweite perspektivische Ansicht der Bearbeitungsanlage in Figur 1 ohne die Transporteinrichtungen, und

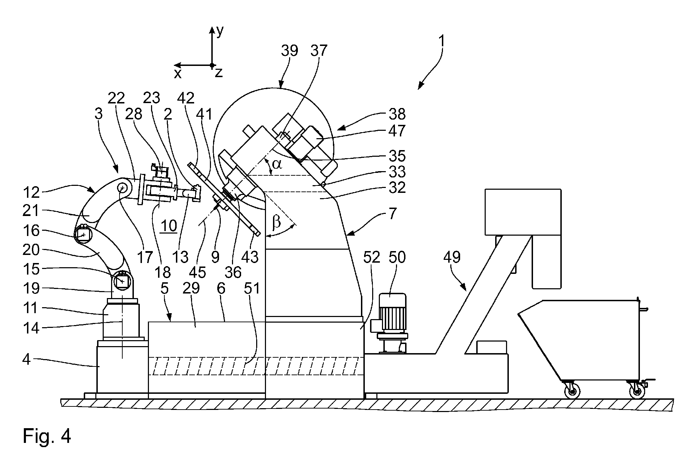

- Figur 4: eine zweite Seitenansicht der Bearbeitungsanlage in Figur 1 ohne die Transporteinrichtungen.

Eine Bearbeitungsanlage 1 weist zur Bearbeitung von Werkstücken 2 eine Werkstück-Positioniereinrichtung 3 auf, die an einem ersten Untergestell-Abschnitt 4 eines Untergestells 5 angeordnet ist. An dem ersten Untergestell-Abschnitt 4 ist ein zweiter Untergestell-Abschnitt 6 befestigt, auf dem ein Ständer 7 mit einer Arbeitsspindeleinheit 8 zum Drehantreiben eines Werkzeuges 9 angeordnet ist. Der Ständer 7 ist von der Werkstück-Positioniereinrichtung 3 in einer horizontalen x-Richtung beabstandet, so dass zwischen dem Ständer 7 und der Werkstück-Positioniereinrichtung 3 ein Arbeitsraum 10 ausgebildet wird. Im Bereich des Arbeitsraums 10 ist der zweite Untergestell-Abschnitt 6 zur Aufnahme von bei der Bearbeitung entstehenden Spänen wannenförmig ausgebildet. Die Bearbeitungsanlage 1 ist beispielsweise auf einer Fundamentplatte befestigt.

Die Werkstück-Positioniereinrichtung 3 weist ein Grundgestell 11 auf, das fest an dem ersten Untergestell-Abschnitt 4 angeordnet ist. An dem Grundgestell 11 ist eine Werkstückhalter-Schwenkeinheit 12 angeordnet, mittels der ein Werkstückhalter 13 um fünf Schwenkachsen 14 bis 18 verschwenkbar ist.

Die Werkstück-Positioniereinrichtung 3 ist als Industrie-Roboter ausgebildet. Die Werkstückhalter-Schwenkeinheit 12 weist zur Ausbildung der fünf Schwenkachsen 14 bis 18 fünf Schwenkteile 19 bis 23 auf. Ein erstes als Karussell ausgebildetes Schwenkteil 19 ist mittels eines ersten Antriebsmotors 24 um die vertikal verlaufende erste Schwenkachse 14 um 360° verschwenkbar angeordnet. Der erste Antriebsmotor 24 ist in das Grundgestell 11 integriert. Die erste Schwenkachse 14 ist parallel zu einer vertikalen y-Richtung, die wiederum senkrecht zu der x-Richtung verläuft.

An dem ersten Schwenkteil 19 ist ein als Roboterarm bzw. Schwenkarm ausgebildetes zweites Schwenkteil 20 angeordnet, das mittels eines zweiten Antriebsmotors 25 um die horizontal verlaufende zweite Schwenkachse 15 verschwenkbar ist. Hierzu ist das zweite Schwenkteil 20 endseitig mit dem ersten Schwenkteil 19 schwenkbar verbunden.

In entsprechender Weise ist an dem zweiten Schwenkteil 20 ein als Schwenkarm ausgebildetes drittes Schwenkteil 21 angeordnet, das mittels eines dritten Antriebsmotors 26 um die horizontal verlaufende dritte Schwenkachse 16 verschwenkbar ist. Hierzu sind die Schwenkteile 20, 21 endseitig schwenkbar miteinander verbunden.

An dem dritten Schwenkteil 21 ist ein als Schwenkarm ausgebildetes viertes Schwenkteil 22 angeordnet, das mittels eines vierten Antriebsmotors 27 um die horizontal verlaufende vierte Schwenkachse 17 verschwenkbar ist. Hierzu sind die Schwenkteile 21, 22 endseitig schwenkbar miteinander verbunden.

An dem vierten Schwenkteil 22 ist ein als Schwenkarm ausgebildetes fünftes Schwenkteil 23 angeordnet, das mittels eines fünften Antriebsmotors 28 um eine fünfte Schwenkachse 18 verschwenkbar ist. Die fünfte Schwenkachse 18 verläuft senkrecht zu der vierten Schwenkachse 17 und schneidet diese nicht. Die Schwenkteile 22, 23 sind endseitig schwenkbar miteinander verbunden. An dem freien Ende des Schwenkteils 23 ist der Werkstückhalter 13 drehfest und lösbar angeordnet. Der Werkstückhalter 13 ist als Werkstückgreifer ausgebildet und ist beispielsweise hydraulisch, pneumatisch oder elektromechanisch betätigbar.

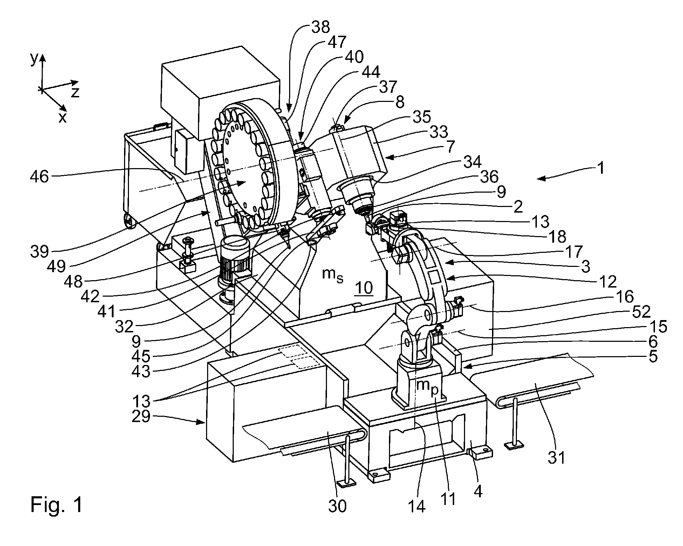

Zum Wechseln des Werkstückhalters 13 ist dieser lösbar an dem fünften Schwenkteil 23 befestigt. Zur Bereitstellung von unterschiedlichen Werkstückhaltern 13 ist seitlich an dem Untergestell 5 ein Werkstückhaltermagazin 29 angeordnet. Die Werkstückhalter 13 sind in Figur 1 lediglich angedeutet.

Zum Zu- und Abführen von Werkstücken 2 sind zwei in Form von Transportbändern ausgebildete Transporteinrichtungen 30, 31 vorgesehen, die beidseitig neben dem ersten Untergestell-Abschnitt 4 angeordnet sind und sich in einer horizontalen z-Richtung erstrecken. Die z-Richtung verläuft senkrecht zu der x- und der y-Richtung, so dass diese ein kartesisches Koordinatensystem bilden.

Der Ständer 7 weist einen im Wesentlichen parallel zu der y-Richtung verlaufenden ersten Ständer-Abschnitt 32 auf, der an dem Untergestell 5 angeordnet ist. An dem ersten Ständer-Abschnitt 32 ist einteilig ein zweiter Ständer-Abschnitt 33 angeformt, der relativ zu der y-Richtung um einen Winkel β geneigt ist. Der zweite Ständer-Abschnitt 33 weist eine Bohrung 34 auf, durch die die Arbeitsspindeleinheit 8 derart geführt ist, dass eine Drehachse 35 der Arbeitsspindeleinheit 8 relativ zu der x-Richtung um einen Winkel α zu der Werkstück-Positioniereinrichtung 3 hin geneigt ist. Die Arbeitsspindeleinheit 8 ist dementsprechend schräg hängend angeordnet. Der Winkel α entspricht dem Winkel β. Für den Winkel α gilt: 20° ≤ α ≤ 70°, insbesondere 30° ≤ α ≤ 60°, und insbesondere 40° ≤ α ≤ 50°. Vorzugsweise ist der Winkel α gleich 45°. Die Arbeitsspindeleinheit 8 weist zur Aufnahme des Werkzeuges 9 ein Spannfutter 36 auf, das mittels eines Spindel-Antriebsmotors 37 um die Drehachse 35 drehantreibbar ist.

Zur Schwingungsdämpfung während der Bearbeitung von Werkstücken 2 gilt für das Verhältnis der Masse mₛ des Ständers 7 und der Masse mₚ der Werkstück-Positioniereinrichtung 3: mₛ/mₚ ≥ 2, insbesondere mₛ/mₚ ≥ 3, und insbesondere mₛ/mₚ ≥ 4.

Seitlich an dem zweiten Ständer-Abschnitt 33 ist eine Werkzeugwechseleinheit 38 mit einem Werkzeugmagazin 39 und einem zugehörigen Werkzeugwechsler 40 angeordnet. Der Werkzeugwechsler 40 ist zwischen der Arbeitsspindeleinheit 8 und dem Werkzeugmagazin 39 angeordnet. Der Werkzeugwechsler 40 weist einen Wechslerarm 41 mit zwei Werkzeugaufnahmen 42, 43 auf, wobei der Wechslerarm 41 mittels eines Wechsler-Antriebsmotors 44 um eine Wechsler-Drehachse 45 verschwenkbar ist. Die Wechsler-Drehachse 45 verläuft parallel zu der Drehachse 35 der Arbeitsspindeleinheit 8.

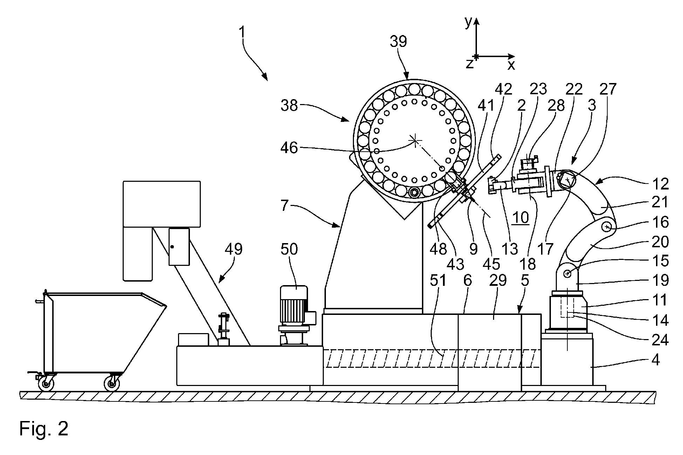

Das Werkzeugmagazin 39 ist als Scheibenmagazin ausgebildet und um eine parallel zu der z-Richtung verlaufende Magazin-Drehachse 46 mittels eines Magazin-Antriebsmotors 47 drehantreibbar. Das Werkzeugmagazin 39 weist mehrere Werkzeughalter 48 auf, die in einer Werkzeugwechselposition derart angeordnet sind, dass die darin aufgenommenen Werkzeuge 9 sich radial zu der Magazin-Drehachse 46 erstrecken. Die Werkzeugwechselposition ist beispielsweise in Figur 2 dargestellt.

Zum Abtransport der bei der Bearbeitung entstehenden Späne ist ein Späneförderer 49 vorgesehen, der eine mittels eines Förder-Antriebsmotors 50 drehantreibbare Förderschnecke 51 aufweist. Der Späneförderer 49 ist an einer der Werkstück-Positioniereinrichtung 3 gegenüberliegenden Seite des zweiten Untergestell-Abschnitts 6 angeordnet, wobei sich die Förderschnecke 51 in den zweiten Untergestell-Abschnitt 6 erstreckt. Die Förderschnecke 51 ist in Figur 2 lediglich angedeutet.

Zur Steuerung der Bearbeitungsanlage 1 sind die Antriebsmotoren 24 bis 28, die Transporteinrichtungen 30, 31, der Spindel-Antriebsmotor 37, der Wechsler-Antriebsmotor 44, der Magazin-Antriebsmotor 47 und der Förder-Antriebsmotor 50 an eine Steuereinheit 52 angeschlossen.

Die zu bearbeitenden Werkstücke 2 werden mittels der Transporteinrichtung 30 antransportiert. Der Werkstückhalter 13 wird mittels der Werkstückhalter-Schwenkeinheit 12 zu dem antransportierten Werkstück 2 verschwenkt. Der Werkstückhalter 13 greift das Werkstück 2 und wird anschließend mittels der Werkstückhalter-Schwenkeinheit 12 zu der Arbeitsspindeleinheit 8 verschwenkt und relativ zu dem Werkzeug 9 positioniert. Hierzu weisen die Schwenkteile 19 bis 23 zugehörige Messsensoren auf, die die Stellung benachbarter Schwenkteile 19 bis 23 zueinander messen, so dass das Werkstück 2 in dem absoluten Koordinatensystem (x-y-z-Koordinatensystem) positionierbar ist.

Das Werkstück 2 wird nun mittels des Werkzeuges 9 bearbeitet. Hierzu wird das Werkzeug 9 mittels des Spindel-Antriebsmotors 37 um die Drehachse 35 drehangetrieben. Das Werkzeug 9 ist beispielsweise ein Fräs- oder Bohrwerkzeug. Die bei der Bearbeitung entstehenden Späne fallen in den wannenförmigen Teil des zweiten Untergestell-Abschnitts 6 und werden mittels der Förderschnecke 51 abtransportiert.

Durch die fünf Schwenkachsen 14 bis 18 der Werkstück-Positioniereinrichtung 3 und die geneigte Anordnung der Arbeitsspindeleinheit 8 ist eine Fünf-Seiten-Bearbeitung des Werkstücks 2 möglich. Aufgrund der wesentlich höheren Masse mₛ des Ständers 7 gegenüber der Masse mₚ der Werkstück-Positioniereinrichtung 3 werden Schwingungen bei der Bearbeitung des Werkstücks 2 wirkungsvoll gedämpft, so dass eine hohe Bearbeitungsgenauigkeit erzielt wird.

Das bearbeitete Werkstück 2 wird mittels der Werkstückhalter-Schwenkeinheit 12 zu der zweiten Transporteinrichtung 31 verschwenkt und dort mittels des Werkstückhalters 13 abgelegt. Die Transporteinrichtung 31 transportiert das fertig bearbeitete Werkstück 2 ab. Anschließend kann die Werkstück-Positioniereinrichtung 3 in der beschriebenen Weise ein neues, zu bearbeitendes Werkstück 2 aufnehmen.

Ist für die Bearbeitung von Werkstücken 2 eines neuen Werkstück-Typs ein Wechsel des Werkstückhalters 13 erforderlich, so schwenkt die Werkstückhalter-Schwenkeinheit 12 den Werkstückhalter 13 zu dem Werkstückhaltermagazin 29 und legt dort den Werkstückhalter 13 ab. Die Befestigung des Werkstückhalters 13 an dem fünften Schwenkteil 23 wird hierfür beispielsweise hydraulisch, pneumatisch oder elektromechanisch gelöst. Anschließend verschwenkt die Werkstückhalter-Schwenkeinheit 12 zu einem neuen Werkstückhalter 13, mit dem die Werkstücke 2 des neuen Werkstück-Typs greifbar sind. Der neue Werkstückhalter 13 wird an das fünfte Schwenkteil 23 gekoppelt. Anschließend verschwenkt die Werkstückhalter-Schwenkeinheit 12 den Werkstückhalter 13 zu der ersten Transporteinrichtung 30, wo ein Werkstück 2 des neuen Werkstück-Typs aufgenommen wird. Die weitere Bearbeitung erfolgt in der oben beschriebenen Weise.

Für einen Werkzeugwechsel wird das Werkzeugmagazin 39 um die Magazin-Drehachse 46 verschwenkt, bis das gewünschte Werkzeug 9 in der in Figur 1 gezeigten Werkzeugwechselposition ist. In der Werkzeugwechselposition ist der Werkzeughalter 48 derart verschwenkt, dass das einzuwechselnde Werkzeug 9 sich radial zu der Magazin-Drehachse 46 erstreckt. Anschließend wird mittels des Wechsler-Antriebsmotors 44 der Wechslerarm 41 im Uhrzeigersinn verschwenkt, so dass die Werkzeugaufnahme 42 das in dem Spannfutter 36 befindliche Werkzeug 9 und die Werkzeugaufnahme 43 das in dem Werkzeughalter 48 befindliche Werkzeug 9 aufnimmt. Anschließend wird der Wechslerarm 41 in Richtung der Wechsler-Drehachse 45 linear verlagert, so dass die Werkzeuge 9 entnommen werden. Daraufhin wird der Wechslerarm 41 mittels des Wechsler-Antriebsmotors 44 um 180° verschwenkt und wieder in Richtung der Wechsler-Drehachse 45 linear verlagert, so dass die Werkzeuge 9 in das Spannfutter 36 und in den Werkzeughalter 48 gewechselt aufgenommen werden. Anschließend wird der Wechslerarm 41 wieder in seine Ausgangsstellung verschwenkt, so dass die Bearbeitung des Werkstücks 2 mit dem gewechselten Werkzeug 9 fortgeführt werden kann.

Die Bearbeitungsanlage 1 eignet sich insbesondere zur spanenden Bearbeitung von metallischen Werkstücken 2 und/oder von Werkstücken 2 aus einem Faserverbundwerkstoff.

## Patentansprüche

1. Bearbeitungsanlage für Werkstücke, umfassend
- eine Werkstück- Positioniereinrichtung (3) zum Positionieren eines zu bearbeitenden Werkstückes (2) mit
-- einem Grundgestell (11),
-- einem Werkstückhalter (13) und
-- einer zwischen dem Grundgestell (11) und dem Werkstückhalter (13) angeordneten Werkstückhalter-Schwenkeinheit (12), die derart ausgebildet ist, dass der Werkstückhalter (13) um mindestens fünf Schwenkachsen (14 bis 18) verschwenkbar ist,
- eine Arbeitsspindeleinheit (8) zum Drehantreiben eines Werkzeuges (9) um eine Drehachse (35), die an einem Ständer (7) derart angeordnet ist, dass die Drehachse (35) relativ zu einer horizontalen x-Richtung um einen Winkel α geneigt ist, wobei gilt: 20° ≤ α ≤ 70°, insbesondere 30° ≤ α ≤ 60°, und insbesondere 40° ≤ α ≤ 50°.

2. Bearbeitungsanlage nach Anspruch 1, **dadurch gekennzeichnet, dass** die Werkstückhalter-Schwenkeinheit (12) derart ausgebildet ist, dass ein erstes Schwenkteil (19) um eine vertikal verlaufende Schwenkachse (14) verschwenkbar an dem Grundgestell (11) angeordnet ist.

3. Bearbeitungsanlage nach Anspruch 1 oder 2, **dadurch gekennzeichnet, dass** die Werkstückhalter-Schwenkeinheit (12) derart ausgebildet ist, dass der Werkstückhalter (13) um mindestens zwei, insbesondere um mindestens drei horizontal verlaufende Schwenkachsen (15 bis 17) verschwenkbar ist.

4. Bearbeitungsanlage nach einem der Ansprüche 1 bis 3, **dadurch gekennzeichnet, dass** die Werkstückhalter-Schwenkeinheit (12) derart ausgebildet ist, dass
- ein zweites Schwenkteil (20) um eine horizontal verlaufende zweite Schwenkachse (15) verschwenkbar an einem ersten Schwenkteil (19) angeordnet ist,
- ein drittes Schwenkteil (21) um eine horizontal verlaufende dritte Schwenkachse (16) verschwenkbar an dem zweiten Schwenkteil (20) angeordnet ist, und
- ein viertes Schwenkteil (22) um eine horizontal verlaufende vierte Schwenkachse (17) verschwenkbar an dem dritten Schwenkteil (21) angeordnet ist.

5. Bearbeitungsanlage nach einem der Ansprüche 1 bis 4, **dadurch gekennzeichnet, dass** die Werkstückhalter-Schwenkeinheit (12) derart ausgebildet ist, dass der Werkstückhalter (13) um mindestens eine Schwenkachse (18) verschwenkbar ist, die um eine horizontal verlaufende Schwenkachse (17) verschwenkbar ist und selbst nicht ständig horizontal verläuft.

6. Bearbeitungsanlage nach einem der Ansprüche 1 bis 5, **dadurch gekennzeichnet, dass** die Werkstückhalter-Schwenkeinheit (12) derart ausgebildet ist, dass ein fünftes Schwenkteil (23) um eine fünfte Schwenkachse (18) verschwenkbar an einem vierten Schwenkteil (22) angeordnet ist, wobei die fünfte Schwenkachse (18) senkrecht zu einer vierten Schwenkachse (17) des vierten Schwenkteils (22) angeordnet ist.

7. Bearbeitungsanlage nach Anspruch 6, **dadurch gekennzeichnet, dass** die fünfte Schwenkachse (18) die vierte Schwenkachse (17) nicht schneidet.

8. Bearbeitungsanlage nach einem der Ansprüche 1 bis 7, **dadurch gekennzeichnet, dass** der Werkstückhalter (13) als Werkstückgreifer ausgebildet ist.

9. Bearbeitungsanlage nach einem der Ansprüche 1 bis 8, **gekennzeichnet, durch** ein Werkstückhaltermagazin (29) zum Bereitstellen mehrerer unterschiedlicher Werkstückhalter (13).

10. Bearbeitungsanlage nach einem der Ansprüche 1 bis 9, **dadurch gekennzeichnet, dass** der Ständer (7) einen parallel zu einer vertikalen y-Richtung verlaufenden ersten Ständer-Abschnitt (32) aufweist, an dem ein zu der Werkstück-Positioniereinrichtung (3) hin geneigter zweiter Ständer-Abschnitt (33) angeordnet ist.

11. Bearbeitungsanlage nach einem der Ansprüche 1 bis 10, **dadurch gekennzeichnet, dass** die Arbeitsspindeleinheit (8) hängend angeordnet ist.

12. Bearbeitungsanlage nach einem der Ansprüche 1 bis 11, **dadurch gekennzeichnet, dass** für ein Verhältnis der Masse mₛ des Ständers (7) und der Masse mₚ der Werkstück-Positioniereinrichtung (3) gilt: mₛ/mₚ ≥ 2, insbesondere mₛ/mₚ ≥ 3, und insbesondere mₛ/mₚ ≥ 4.

13. Bearbeitungsanlage nach einem der Ansprüche 1 bis 12, **dadurch gekennzeichnet, dass** an dem Ständer (7), insbesondere an dem zweiten Ständer-Abschnitt (33), eine Werkzeugwechseleinheit (38) mit einem Werkzeugmagazin (39) und einem Werkzeugwechsler (40) angeordnet ist.

14. Bearbeitungsanlage nach einem der Ansprüche 1 bis 13, **dadurch gekennzeichnet, dass** die Werkstück-Positioniereinrichtung (3) und der Ständer (7) auf einem Untergestell (5) angeordnet sind, in das ein Späneförderer (49) integriert ist.

15. Bearbeitungsanlage nach einem der Ansprüche 1 bis 14, **gekennzeichnet, durch** mindestens eine Transporteinrichtung (30, 31) zum An- und Abtransport von Werkstücken (2).
